# EUROPÄISCHE PATENTSCHRIFT

(11) **EP 2 277 149 B1**
(45) Veröffentlichungstag und Bekanntmachung des Hinweises auf die Patenterteilung: **28.09.2022**
(21) Anmeldenummer: 09733697.8
(22) Anmeldetag: 18.03.2009
(51) Int. Cl.: G07D 11/30

(54) **VERFAHREN ZUR SPEICHERUNG VON INFORMATIONEN ÜBER GELDSCHEINE UND SELBSTBEDIENUNGS-TERMINAL**
METHOD FOR STORING INFORMATION ABOUT BANKNOTES AND SELF-SERVICE TERMINAL
PROCÉDÉ POUR STOCKER DES INFORMATIONS CONCERNANT DES BILLETS ET GUICHET AUTOMATIQUE BANCAIRE

(30) Priorität: 22.04.2008 DE 102008020208
(43) Veröffentlichungstag der Anmeldung: 26.01.2011
(73) Patentinhaber: Wincor Nixdorf International GmbH, 33106 Paderborn (DE)
(72) Erfinder: LÜCKING, Olver, 33104 Paderborn (DE)
(86) Internationale Anmeldenummer: PCT/EP2009/053213
(87) Internationale Veröffentlichungsnummer: WO 2009/130093

(56) Entgegenhaltungen:
- WO-A-99/05624
- WO-A-2005/001779
- WO-A-2005/064553
- WO-A1-2008/092754
- DE-A1-102007 014 176

## Beschreibung

Die Erfindung betrifft Verfahren zur Speicherung von Informationen über zu verifizierende Geldscheine, die einem SB-Terminal übergegeben wurden und die durch das SB-Terminal in Kassetten abgelegt werden, und ein Selbstbedienungs-Terminal zur Entgegennahme von Geldscheinen.

### Gebiet der Erfindung:

Herkömmliche Selbstbedienungs-Terminals/Automaten zur Entgegennahme von Gegenständen, wie Geld, Schecks, Briefe, Pakete, Pfandgegenstände, kurz SB-Terminal genannt, nehmen Gegenstände an, prüfen diese anschließend und führen eine Transaktion basierend auf diesen Gegenständen durch. Zur Bedienung weisen diese SB-Terminals ein Benutzerinterface auf, über das Informationen für die Transaktion hinterlegt werden. Bei Geldtransaktionen z.B. benötigt der Nutzer bzw. Kunde eine EC-Karte (Kontoidentitätskarte) oder eine Tastatur, um das Zielkonto bzw. eine eindeutige Nutzerkennung und ggfs. weitere Informationen anzugeben.

Häufig weisen diese SB-Terminals eine automatische Erkennung auf (z.B. DE102007009704A1), um gefälschte Gegenstände zu erkennen. Soll z.B. Falschgeld erkannt werden, so wird eine Signatur (in der Regel die Seriennummer mit Zeit und Kundendetails) auf dem Automaten gespeichert, das Geld geht unter Verwendung einer Kassette in die Zentrale, und wird dort erneut geprüft. Wenn nun hier ebenfalls Falschgeld gefunden wird, so muss der Schein am selben Automaten erneut geprüft werden, um die Details der Transaktion, insbesondere die Herkunft, zu erfahren.

Die im SB-Terminal gespeicherte Signatur muss dabei über den Zeitstempel mit einer Transaktion in Verbindung gebracht werden, zu der Transaktion kann dann der Kunde ermittelt werden. Ein hierbei zusätzliches Problem ist, dass die Zeitstempel (Automat, Host) Differenzen aufweisen können, die einen einfachen Abgleich erschweren.

Die Druckschrift WO99/05624 offenbart die Nutzung von Standardkassetten für den Transport von Notenstapeln. Die Kassette weist eine Smartcard auf, auf der die Geschichte jeder Banknote abgelegt ist.

Die WO 2005/064553 offenbart ein Verfahren bei dem der Füllstand einer Kassette erfasst wird.

Die WO 2005/001779A1 offenbart ein Verfahren bei dem Geldnoten in Cash Centern zweistufig geprüft werden.

Die WO 2008/092754 offenbart ein Verfahren bei dem Transaktionsnummern in Geldkassetten abgespeichert werden.

### Überblick über die Erfindung:

Aufgabe der Erfindung ist eine effiziente Weitergabe und Verwaltung von Informationen über gefälschte Gegenstände, die einem SB-System übergegeben wurde. Diese Aufgabe wird gelöst durch ein Verfahren zur Speicherung von Informationen über zu verifizierende Geldscheine nach Anspruch 1 und einen Selbstbedienungsterminal zur Entgegennahme von Geldscheinen nach Anspruch 2.

Gelöst wird die Aufgabe, indem Informationen mit Bezug zu den durch das SB-Terminal ermittelten gefälschten Geldscheinen auf ein Speichermedium, das physisch mit einer Kassette verbunden ist, geschrieben wird. In der Kassette wird die Seriennummer gespeichert. Dann wird das Geld mit der Geldkassette in die Zentrale gebracht. Dort wird erneut geprüft, und falls ebenfalls Falschgeld gefunden wird, wird die Seriennummer aus dem Kassettenspeicher gelesen.

Erfindungsgemäß werden zu der Seriennummer des Falschgeldes weitere Daten abgelegt. Dabei werden zusätzlich zur Seriennummer Informationen abgespeichert, die eine eindeutige Bestimmung der Transaktion zulassen, ohne dabei erneut auf den Geldautomaten zuzugreifen.

Hierbei wird z.B. auf ein zentrales System zugegriffen, das anhand der Transaktionsnummer weitere Details der Transaktion wie Uhrzeit, Namen, Person, Zielkonto, etc. bereitstellt. Durch diesen Ansatz kann die Transaktionsnummer direkt mit dem Kunden in Verbindung gebracht werden. Der Kunde kann dann direkt z.B. durch den Geld-Dienstleister bei der Bank erfragt werden oder im Falle von Falschgeld direkt den Behörden übergeben werden. Der Dienstleister kann zudem direkt am Bankensystem angeschlossen sein, oder er reicht nur die Transaktionsnummer weiter.

Ein Aufsuchen des Automaten ist nicht mehr notwendig. Zeitstempel spielen keine Rolle mehr.

Auch können die Transaktionsinformationen über ein zentrales Verwaltungsnetzwerk für SB-Terminals weiterverarbeitet werden. So besitzt z. B.. ProClassic/Enterprise (PC/E) von Wincor Nixdorf (der Anmelderin) alle Merkmale, die für den Aufbau einer voll integrierten Multikanal-Strategie erforderlich sind. Sie erlaubt es dem Anwender, kanalübergreifende Optimierungen durchzuführen. Dafür schafft die Technik eine netzzentrierte Architektur, welche die Geschäftslogik aller dezentralen Endgeräte auf einen zentralen Server überträgt. Neben den verschiedenen Kanälen integriert die Anwendung alle SB-Systeme unterschiedlicher Hersteller. Der Übergang zu einer netzzentrierten Architektur erfolgt dabei sanft. Bestehende und neue Infrastrukturen werden durch die offene Software unterstützt, d.h., die einzelnen Endgeräte lassen sich Schritt für Schritt umstellen. Insbesondere Prozesse, bei denen die Abwicklung von Transaktionen bankintern erfolgt, werden mit PC/E durch die flexible Anbindung der Backend-Systeme optimiert.

Die offene Architektur von PC/E basiert im vorliegenden Fall auf dem herstellerunabhängigen Standard J2EE. Sie ist implementiert auf der Infrastruktur von J2EE-compliant Application Servern, die durch ihre Skalierbarkeit netzzentrierte Lösungen optimal unterstützen.

Im Umfeld von PC/E könnten die Signaturen an den PC/E-Server übertragen werden, da die Dienstleister allerdings nicht unbedingt einen direkten Zugang zum System haben, ist auch hier die Verwendung der Transaktionsnummer in den Kassetten eine Lösung. Viele Host-Systeme reichen u.U. keine Transaktionsnummer weiter, das Management-System (PC/E) generiert in diesem Fall eine eigene Nummer, die verwendet werden kann. Entweder wird die Transaktionsnummer hierbei mit einem Zähler (eindeutige Identifikation) vom SB-System verknüpft, oder die erzeugte Transaktion wird an das SB-System gesendet, sodass diese in der Kassette gespeichert werden kann.

Wenn keinerlei Transaktionsnummern durch das Host-System bereitgestellt werden, so kann über Schlüsselkreise auf dem Automaten direkt eine Transaktionsnummer generiert werden, diese wird in den Kassetten gespeichert und muss bei der Finalisierung der Transaktion zum Host mit übertragen werden, somit kann dann anschließend über eine DB-Abfrage über das neue Merkmal ebenfalls der vereinfachte Workflow genutzt werden, da eine Zuordnung zwischen SB-System-Transaktionsnummer und Host-Transaktionsnummer gegeben ist. Grundsätzlich bieten sich dieses Verfahren und die entsprechenden SB-Systeme auch für Schecks, Briefe, Pakete, Pfandrücknahmesysteme usw. an, die ebenfalls eine von einem Zentralrechner oder von dezentralen Systemen über Schlüsselkreise generierte Transaktionsnummern erhalten können. Und wo eine nachträgliche Verifizierung notwendig ist bei gleichzeitiger Unterbrechung eines rein elektronischen Ablaufes.

Im Detail handelt es sich um Verfahren zur Speicherung von Informationen über zu verifizierende Geldscheine, die einem SB-Terminal übergegeben wurde und die durch das SB-Terminal in Kassetten abgelegt werden. Das SB-Terminal weist Transporteinheiten auf, um die Geldscheine automatisch in die Kassetten zu transportieren, die vorher über ein Eingabebereich in das SB-Terminal geführt wurden.

Erfindungsgemäß handelt es sich um Geldkassetten. Die Scheine werden dabei über einen Aufnahmeschacht entgegengenommen, gezählt, geprüft und in der Kassette abgelegt.

Das Verfahren umfasst dann folgende Schritte:
Das SB-Terminal weist einen Bereich zur automatischen Entgegennahme der Gegenstände auf.

Nach der Entgegennahme werden die Gegenstände verifiziert. Die Verifizierung versucht, die Identität und ggfs. die Echtheit des Gegenstandes automatisch zu ermitteln. Die Prüfung erfolgt automatisch durch Standardverfahren, die optische, magnetische oder elektronische Techniken einsetzen, Details hierzu sind dem Fachmann bekannt.

Falls eine Verifizierung nicht erfolgreich war, wird nach Bestimmen einer eindeutigen Identifikation vom nicht verifizierten Gegenstand die Identifikation auf einem Speichersystem, das physisch mit der Kassette verbunden ist und mit dieser transportiert wird, abgespeichert. Es ist natürlich auch denkbar, dass jegliche Transaktion auf dem Speichersystem der Kassette abgelegt wird, unabhängig von der Verifikation (d.h.) alle Daten werden hierbei gespeichert. Das Speichersystem auf den Kassetten kann ein magnetischer, optischer oder ein elektronischer Speicher sein, wie Silizium-Speicher, insbesondere ein Flash-Speicher sein. Der Speicher kann mit einer integrierten Stromversorgung verbunden sein, falls dies notwendig sein sollte. Der Speicher ist vorzugsweise verschlüsselt oder mit Signaturen versehen, um ihn zu schützen.

Der Speicher wird über eine Steckverbindung mit dem SB-Terminal verbunden. Eine denkbare Steckverbindung wäre USB oder Firewire. Es ist auch denkbar, dass die Verbindung optisch oder über Funk aufgebaut wird.

Erfindungsgemäß wird zusätzlich die Transaktionsnummer zur Identität des Gegenstandes abgelegt. Die Transaktionsnummer ist so ausgebildet, dass durch sie Transaktionsdetails zur Verfügung gestellt werden können, ohne dass ein erneuter Zugriff auf das SB-Terminal zu erfolgen hat.

D.h., es soll möglich sein, anhand der Transaktionsnummer von einem entfernten Rechner, der auf die Transaktionsnummer Zugriff hat, weitere Daten zu erlangen. Dies kann einerseits durch weitere Informationen erfolgen, die auf dem Speichersystem der Kassette selbst abgelegt sind, und andererseits durch ein zentrales Serversystem, das die Transaktionsnummer mit dem SB-Terminal abgleicht. In einigen Ausführungsformen sind Abbildungen von eindeutigen Nummern, die das SB-Terminal erzeugt hat, auf Transaktionsnummern in einer Datenbank abgespeichert. Dies ist immer dann notwendig, wenn es keinen Zugriff des SB-Terminals auf die Transaktionsinformationen des dahinterliegenden Transaktionssystems gibt. Das Transaktionssystem oder ein zwischengeschaltetes System erhält dann eine eindeutige Kennung vom SB-Terminal, die es dann mit einer Transaktionsnummer verknüpft.

Es ist auch denkbar, dass falls das SB-Terminal keine Transaktionsnummer vom Transaktionssystem erhält, diese von einem externen Verwaltungssystem eingespielt werden, oder ein Nummernraum verwendet wird, der vom SB-Terminal verwaltet wird, und der einer Datenbank zur Verfügung gestellt wird, die eine Beziehung zwischen Nummernraum und Transaktionsnummer herstellt, wobei ein Zugriff über die Datenbank auf die Transaktionsnummer erfolgt, um weitere Transaktionsdetails zu erhalten.

Die Kassette umfasst somit alle relevanten Details und erlaubt, nach dem Entfernen aus dem SB-Terminal und dem Anschließen an ein anderes System, einen Zugriff auf relevante Informationen, ohne dabei wieder auf das SB-Terminal zurückzugreifen zu müssen.

Bei Falschgeld wird z.B. neben der Seriennummer des Falschgeldes auch die Transaktionsnummer abgespeichert, die dann automatisch einen Zugriff auf weitere Transaktionsdetails zulässt, in dem auf ein zentrales System zugegriffen wird, oder auf weitere Details, die auf dem Speichersystem abgelegt sind.

### Figurenbeschreibung:

Die einzige Figur zeigt einen Ablauf des Verfahrens zwischen einem SB-Terminal, einem zentralen Server und einem Computersystem, das die Daten von einem Speichersystem der Kassette liest.

### Beschreibung der Ausführungsform:

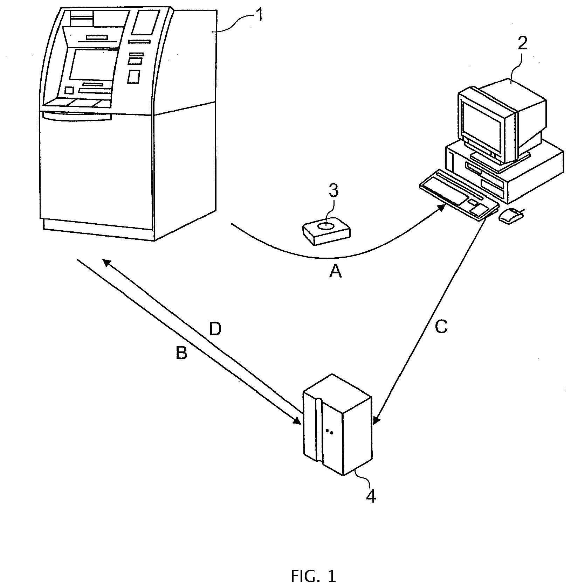

Die Fig. 1 zeigt den Ablauf des erfindungsgemäßen Verfahrens.

Einem SB-Terminal 1 (Geldautomat) wird Geld übergeben. Dieses wird vom Geldautomat automatisch in einer Kassette 3 abgelegt.

Bevor es abgelegt wird, erfolgt eine Überprüfung bzw.

Verifizierung um die Seriennummer und ggfs. die Echtheit festzustellen. Hierbei werden bekannt Techniken eingesetzt.

Gleichzeitig wird von einem Transaktionsserver 4 eine Transaktionsnummer (B) angefragt, die dann vom Transaktionsserver 4 bereitgestellt wird (D). Diese so ermittelten Daten (Transaktionsnummer / Seriennummer) werden auf einem Speichersystem in der Kassette 3 abgelegt. Die Geldkassette wird regelmäßig abgeholt (A) und die Daten können in einer Zentrale von einem Computer 2 ausgelesen werden, der somit bei einer erneuten Analyse des Geldes und einem Fund von Falschgeld die notwendigen Daten von der Kassette lesen kann.

Falls in der Zentrale Falschgeld gefunden wurde, so kann anhand der Seriennummer auf die Transaktionsnummer zugegriffen werden, die in der Kassette zusammen abgelegt sind. Anhand der Transaktionsnummer können dann vom Serversystem 4 die Details der Transaktion angefragt (C) werden, um Namen, Zeitpunkt und ähnliches zu erhalten.

Die beschriebene Ausführungsform stellt keine Beschränkung der Erfindung dar. Sie dient lediglich dem Verständnis der Erfindung.

### Bezugszeichenliste

- 1: SB-Terminal
- 2: dezentraler Computer
- 3: Geldkassette mit integriertem Speichersystem
- 4: Server-System mit Transaktionsdetails
- A, B, C, D: Datenflüsse

## Patentansprüche

1. Verfahren zur Speicherung von Informationen über zu verifizierende Geldscheine, die einem SB-Terminal übergegeben wurden und die durch das SB-Terminal in Kassetten abgelegt werden, umfassend folgende Schritte:
- Entgegennahme von Geldscheinen;
- Verifizieren der Geldscheine, um die Seriennummer und die Echtheit festzustellen;
- Speichern der Seriennummer und einer Transaktionsnummer auf einem Speichersystem, das physisch mit der Kassette verbunden ist und mit dieser transportiert wird, wobei gleichzeitig zum Verifizieren die Transaktionsnummer von einem Transaktionsserver (4) angefordert wird(B), die dann vom Transaktionsserver (4) bereitgestellt (D) wird, wobei mittels der Transaktionsnummer, die auf dem Speichersystem der Kassette abgelegt wird, Details der Transaktion von dem Transaktionsserver abgerufen werden.

2. Selbstbedienungs-Terminal zur Entgegennahme von Geldscheinen, wobei die Geldscheine automatisch in einer Kassette abgelegt werden, umfassend:
- Mittel zur Entgegennahme der Geldscheine;
- Mittel zum Verifizieren der Geldscheine um die Seriennummer und die Echtheit festzustellen;
- Mittel zum Speichern der Seriennummer und einer Transaktionsnummer auf einem Speichersystem, das physisch mit der Kassette verbunden ist und mit dieser transportiert wird,
zum Anfordern (B) der Transaktionsnummer von einem Transaktionsserver gleichzeitig zum Verifizieren (4), die dann vom Transaktionsserver (4) bereitgestellt (D) wird, wobei mittels der Transaktionsnummer, die auf dem Speichersystem der Kassette abgelegt wird, Details einer Transaktion von dem Transaktionsserver abrufbar sind.

## Claims

1. Method for storing information about banknotes that need to be verified, which have been transferred to a self-service terminal and which are stored by the self-service terminal in cassettes, comprising the following steps:
- receiving banknotes;
- verifying the banknotes in order to determine the serial number and the genuineness;
- storing the serial number and a transaction number on a storage system, which is physically connected to the cassette and is transported therewith, wherein at the same time verification is achieved by requesting (B) the transaction number from a transaction server (4), which transaction number is then provided (D) by the transaction server (4), the transaction number stored on the storage system of the cassette being used to retrieve details of the transaction from the transaction server.

2. Self-service terminal for receiving banknotes, the banknotes automatically being stored in a cassette, comprising:
- means for receiving the banknotes;
- means for verifying the banknotes in order to determine the serial number and the genuineness;
- means for storing the serial number and a transaction number on a storage system, which is physically connected to the cassette and is transported therewith, for requesting (B) the transaction number from a transaction server at the same time for verification (4), which transaction number is then provided (D) by the transaction server (4), the transaction number stored on the storage system of the cassette being able to be used to retrieve details of a transaction from the transaction server.

## Revendications

1. Procédé pour mémoriser des informations à propos de billets de banque à vérifier, lesquels ont été transmis à un terminal en libre-service et lesquels ont été déposés dans des cassettes par le terminal en libre-service, comprenant les étapes suivantes :
- réception de billets de banque ;
- vérification des billets de banque afin de déterminer le numéro de série et l'authenticité ;
- mémorisation du numéro de série et d'un numéro de transaction sur un système de mémoire qui est relié physiquement à la cassette et qui est transporté avec celle-ci, le numéro de transaction étant demandé (B) simultanément avec la vérification par un serveur de transaction (4), lequel est ensuite fourni (D) par le serveur de transaction (4), des détails de la transaction étant invoqués par le serveur de transaction au moyen du numéro de transaction qui est stocké sur le système de mémoire de la cassette.

2. Terminal en libre-service destiné à recevoir des billets de banque, les billets de banque étant déposés automatiquement dans une cassette, comprenant :
- des moyens destinés à recevoir les billets de banque ;
- des moyens destinés à vérifier les billets de banque afin de déterminer le numéro de série et l'authenticité ;
- des moyens destinés à mémoriser le numéro de série et un numéro de transaction sur un système de mémoire qui est relié physiquement à la cassette et qui est transporté avec celle-ci,
à demander (B) le numéro de transaction par un serveur de transaction (4) simultanément avec la vérification, lequel est ensuite fourni (D) par le serveur de transaction (4), des détails d'une transaction pouvant être invoqués par le serveur de transaction au moyen du numéro de transaction qui est stocké sur le système de mémoire de la cassette.
